# EUROPÄISCHE PATENTANMELDUNG

(11) **EP 0 931 932 A2**
(43) Veröffentlichungstag der Anmeldung: **28.07.1999**
(21) Anmeldenummer: 99108036.7
(22) Anmeldetag: 19.04.1994
(51) Int. Cl.: F03C 1/04, F04B 53/08

(54) **Hydrostatisch-mechanisches Getriebe zum Antrieb einer Mischtrommel**

(30) Priorität: 21.04.1993 DE 4313025
(62) Teilanmeldung aus: 94914403.4
(71) Anmelder: ZF FRIEDRICHSHAFEN Aktiengesellschaft, 88038 Friedrichshafen (DE)
(72) Erfinder: Mann, Egon, 88045 Friedrichshafen (DE); Gebhard, Wolfgang, 88048 Friedrichshafen (DE)

(57) **Zusammenfassung**

Die Erfindung bezieht sich auf ein hydrostatischmechanisches Getriebe zum Antrieb einer Mischtrommel, insbesondere eines Transportbeton-Mischers. Zur Verbesserung der Kühlung wird aus dem Hochdruckkreislauf (Leitung 4 bzw. 5) ständig Öl ausgespeist. Dem Innenraum des Getriebegehäuses (9) wird ständig gekühltes Öl zugeführt, in der Weise, daß auch eine Kühlung des Hydraulikmotors (6) erfolgt. Um die Geräuschentwicklung zu reduzieren, ist der Hydraulikmotor (6) vorzugsweise als langsam laufender Radialkolbenmotor ausgeführt.

## Beschreibung

Die Erfindung bezieht sich auf ein hydrostatisch-mechanisches Getriebe zum Antrieb einer Mischtrommel. Insbesondere handelt es sich um den Antrieb der Mischtrommel eines Transportbeton-Mischers. Das Getriebe weist eine Hydraulikpumpe auf, die über Leitungen mit einem Hydraulikmotor verbunden ist. Die Hydraulikpumpe ist von einem Pumpengehäuse umgeben. Ein Getriebegehäuse dient der Aufnahme des Hydraulikmotors und eines Planetengetriebes. Der Steg dieses Planetengetriebes steht mit einem Antriebsflansch der Mischtrommel in Antriebsverbindung.

Aus der DE-A-29 04 107 ist ein Mischtrommel-Antrieb für einen Transport-Mischer bekanntgeworden, bei dem insbesondere der Hydromotor innerhalb eines Getriebegehäuses angeordnet ist. Ein Ölbehälter umgibt den Hydromotor, um eine kompakte Bauweise und eine bessere Wärmeabfuhr zu erreichen.

Der vorliegenden Erfindung liegt die Aufgabe zugrunde, ein Getriebe zum Antrieb einer Mischtrommel dahingehend weiter zu verbessern, daß eine bessere Kühlung des hydrostatischen Teils des Antriebs erreicht wird. Das Getriebe soll sich insbesondere auch durch eine kompakte Bauweise und eine geringe Geräuschentwicklung auszeichnen. In Erweiterung der Aufgabenstellung soll ein Nachpendeln der Mischtrommel verhindert werden, wenn der Antriebsmotor stillgesetzt wird.

Die der Erfindung zugrunde liegende Aufgabe wird dadurch gelöst, daß aus dem Hochdruckkreislauf über je eine Verbindungsleitung ständig Öl ausgespeist wird, daß ferner dem Innenraum des Getriebegehäuses ständig über eine Leitung Öl, das einen Ölkühler passiert hat, zugeführt wird, wobei die Leitung an einer Stelle im Getriebegehäuse mündet, die dem Hydraulikmotor unmittelbar benachbart ist. Bei der vorgeschlagenen Lösung besteht die Kühlung aus zwei getrennten Systemen. Ein Teil des Öles im geschlossenen Hochdruckkreis wird ständig durch gekühltes Öl ersetzt. Weiter wird gekühltes Öl in den Innenraum des Getriebegehäuses geleitet, und zwar in unmittelbare Nähe des Hydraulikmotors. Dieses Öl durchströmt den Hydraulikmotor, der vorzugsweise als langsam laufender Radialkolbenmotor ausgebildet ist. Hierbei werden die Kolben, die Rollen, die Nokkenbahn (Cam) sowie der Zylinderblock gekühlt. Hierdurch wird die Lebensdauer dieser Bauteile, insbesondere der Nokkenbahn, gesteigert. Das ausgespeiste Öl gelangt entweder in den Innenraum des Pumpengehäuses zur Spülung der Pumpe oder wird der Leitung, die zum Ölkühler führt, unmittelbar - unter Umgehung der Pumpe - zugeführt.

Die Verbindungsleitungen führen zu einem Spülschieber, der jeweils eine unter Hochdruck stehende Leitung über ein Spülventil mit der Niederdruckseite verbindet. Der Spülschieber und das Spülventil sind vorzugsweise im Getriebegehäuse angeordnet.

Eine besonders gute Kühlung der Speisepumpe wird erreicht, wenn aus dem Innenraum des Getriebegehäuses über eine Leitung und einen Filter Öl durch die Speisepumpe angesaugt wird.

Eine konstruktiv einfache Lösung besteht darin, den Spülschieber aus einem 3/3-Wegeventil und das Spülventil aus einem Druckbegrenzungsventil zu bilden.

Eine besonders effektive Kühlung des Hydraulikmotors ist dann auf einfache Art und Weise zu erzielen, wenn die Leitung in unmittelbarer Nähe des Hydraulikmotors in den Innenraum des Getriebegehäuses mündet. In diesem Fall werden die Nockenbahn, die Rollen, die Kolben und der Zylinderblock des Radialkolbenmotors von dem aus der Leitung ausströmenden Öl in axialer Richtung angeströmt.

Wenn die Leitung in unmittelbarer Nähe des Hydraulikmotors einmündet, läßt sich zudem der Vorteil erzielen, daß zwischen dem aus der Leitung ausströmenden Öl und dem Leckageöl des Hydraulikmotors eine Vermischung eintritt.

Ein wesentliches Merkmal, für das gesondert Schutz begehrt wird, besteht darin, daß jeder Kolben des Hydraulikmotors über Federelemente im Zylinderblock abgestützt wird. Hiermit läßt sich eine ständig kraftschlüssige Verbindung zwischen den Rollen, den Kolben und der Nockenbahn des Radialkolbenmotors erzielen. Hiermit wird einem Nachpendeln der Betonmischer-Trommel beim Abstellen des Verbrennungsmotors wirksam begegnet. Dieses Nachpendeln wird vermieden, da eine Unterbrechung des Kraftflusses von der Betonmischer-Trommel zum hydrostatischen Teil des Antriebs verhindert wird.

Damit auf den Hydraulikmotor keine Kippkräfte einwirken, ist die Mitnahmeverbindung zwischen dem Hydraulikmotor und dem inneren Zentralrad des Planetengetriebes aus einem Keilwellenprofil gebildet. Dieses überträgt ausschließlich ein Drehmoment. Das Keilwellenprofil ist in Längsrichtung vorzugsweise sphärisch geformt.

Um eine Übertragung von Kippmomenten zuverlässig zu verhindern, ist das innere Zentralrad zusätzlich über einen Bund lediglich in axialer Richtung am Zylinderblock des Hydraulikmotors fixiert.

Eine einfache Anordnung erhält man, wenn das Getriebegehäuse aus zwei Gehäusehälften zusammengefügt ist. In diesem Fall ist lediglich eine Dichtstelle vorhanden, so daß der Aufwand für eine zuverlässige Abdichtung des Getriebegehäuses gering ist.

Für die Herstellung, die Montage und die Wartung des Getriebes ist es besonders vorteilhaft, wenn es als Systemeinheit ausgebildet ist. Diese Systemeinheit besteht aus einem Filter, einem Tank, einem Ölkühler und einem Hydraulikmotor.

Um die Geräuschentwicklung gering zu halten, ist es ferner vorteilhaft, den Hydraulikmotor aus einem langsam laufenden Radialkolbenmotor zu bilden.

Weitere, für die Erfindung wesentliche Merkmale sowie die daraus resultierenden Vorteile sind der nachfolgenden Beschreibung eines Ausführungsbeispiels der Erfindung zu entnehmen. Es zeigen:
- Fig. 1: ein Hydraulikschema eines hydrostatischmechanischen Mischergetriebes;
- Fig. 2: ein konstruktiv ausgeführtes Mischergetriebe im Längsschnitt;
- Fig. 3: eine Getriebegehäusehälfte des Mischergetriebes mit Einzelheiten zur Ölführung und
- Fig. 4: einen stark vereinfachten Ausschnitt eines langsam laufenden Radialkolben-Hydromotors.

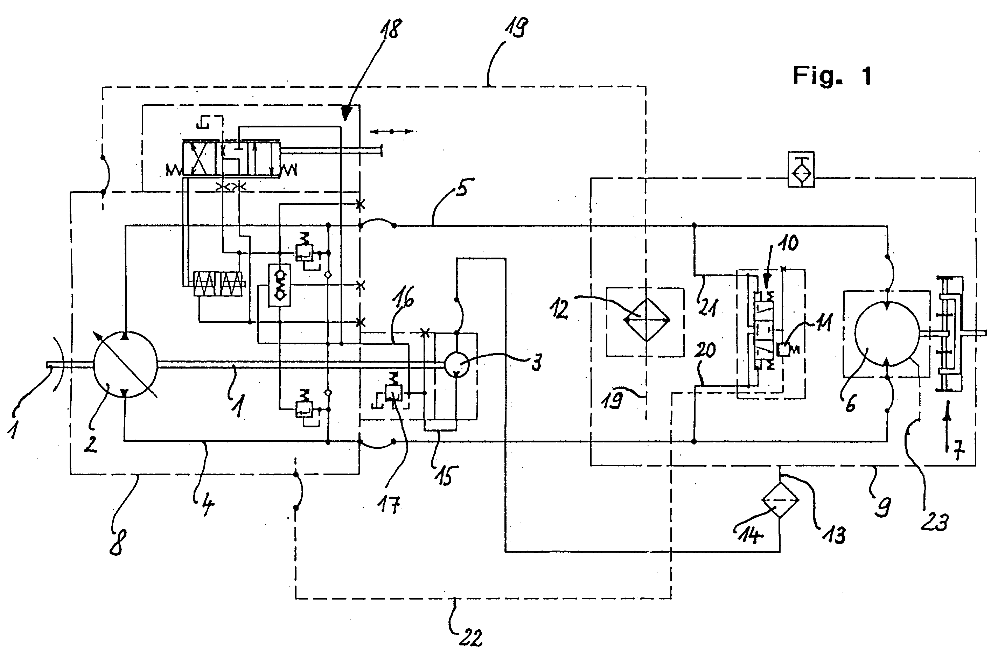

In Fig. 1 wird über eine Welle 1, die an einen selbst nicht dargestellten Verbrennungsmotor angeschlossen ist, eine Hydraulikpumpe 2 angetrieben. Die Hydraulikpumpe 2 ist als Verstelleinheit mit umkehrbaren Drehrichtungen ausgebildet. Über die verlängerte Welle 1 wird zudem eine Speisepumpe 3 angetrieben.

Die Hydraulikpumpe 2 ist über Leitungen 4 und 5 mit einem Hydraulikmotor 6 verbunden. Der Hydraulikmotor 6 treibt über ein nachgeschaltetes, einstufiges Planetengetriebe 7 eine selbst nicht abgebildete Betonmischer-Trommel an.

Die Hydraulikpumpe 2 ist von einem Pumpengehäuse 8 umgeben. Ein Getriebegehäuse 9 umgibt den Hydraulikmotor 6, das Planetengetriebe 7, einen Spülschieber 10 und ein Spülventil 11.

Im Getriebegehäuse 9 ist ferner ein Ölkühler 12 angeordnet. Der Ölkühler 12 kann auch - vorzugsweise - direkt an das Getriebegehäuse 9 angeflanscht sein.

Vom Getriebegehäuse 9 führt eine Leitung 13 zu einem Filter 14 und von hier aus zur Speisepumpe 3. Die Speisepumpe 3 saugt aus dem Innenraum des Getriebegehäuses 9 Öl über die Leitung 13 und den Filter 14 an und fördert es über eine Leitung 15, von der eine Leitung 16 abzweigt, in den jeweiligen Niederdruckkreislauf. An die Leitung 16 ist ein Druckbegrenzungsventil 17 angeschlossen.

Der Öffnungsdruck des Druckbegrenzungsventils 17 liegt über dem Öffnungsdruck des Spülventils 11. Das Druckbegrenzungsventil 17 kann beispielsweise auf einen Öffnungsdruck von 25 bar eingestellt sein, während das Spülventil bei einem Druck von 20 bar öffnet.

Die hydraulische Verstelleinheit 18 ist von bekannter Bauart und dient zur Verstellung der Hydraulikpumpe 2.

Über eine Leitung 19 ist das Pumpengehäuse 8 mit dem Ölkühler 12 verbunden. Die Leitung 19 mündet nach dem Ölkühler 12 im Getriebegehäuse 9.

Von den Leitungen 4 und 5 führen Verbindungsleitungen 20 und 21 zum Spülschieber 10. Je nach Drehrichtung der Hydraulikpumpe 2 herrscht entweder in der Leitung 4 oder in der Leitung 5 ein Hochdruck, so daß entweder das in der Zeichnung unten liegende Feld oder das in der Zeichnung oben liegende Feld des als 3/3-Wegeventil ausgebildeten Spülschiebers 10 geschaltet wird. Ein Teil des Öles fließt daher ständig aus einer der Leitungen 4 oder 5 über das Spülventil 11 und eine Verbindungsleitung 22 in das Pumpengehäuse 8 zurück. Soll die Hydraulikpumpe 2 nicht durchspült werden, mündet die Leitung 22 nicht im Pumpengehäuse, sondern ist mit der Leitung 19 - vor dem Ölkühler 12 - verbunden.

Beim Betrieb des Hydraulikmotors 6 fällt Leckageöl an, das in das Innere des Getriebegehäuses 9 abläuft. Dies soll durch eine schematisch eingezeichnete Leitung 23 für das Leckageöl verdeutlicht werden. Des besseren Verständnisses wegen sei an dieser Stelle erwähnt, daß die Mündungsstelle der Leitung 19, aus der gekühltes Öl in das Getriebegehäuse 9 einströmt, räumlich so angeordnet ist, daß dieses Öl den Hydraulikmotor 6 umströmt und hierbei das anfallende - erhitzte - Leckageöl durch Vermischung mit abgeführt wird.

Anhand des vorstehend erläuterten Hydraulikschemas wird deutlich, daß die Kühlung des hydrostatisch-mechanischen Getriebes auf zwei Wegen erfolgt: Ein Teil des Öles im geschlossenen Hochdruckkreis (Hydraulikpumpe 2, Leitungen 4 und 5 und Hydraulikmotor 6) wird über das Spülventil 11 ausgespeist und über die Speisepumpe 3 ständig durch kühles Öl aus dem Inneren des Getriebegehäuses 9 ersetzt.

Das aus der Leitung 19 ausströmende kühle Öl durchströmt den Hydraulikmotor 6, der vorzugsweise als langsam laufender Radialkolbenmotor ausgebildet ist.

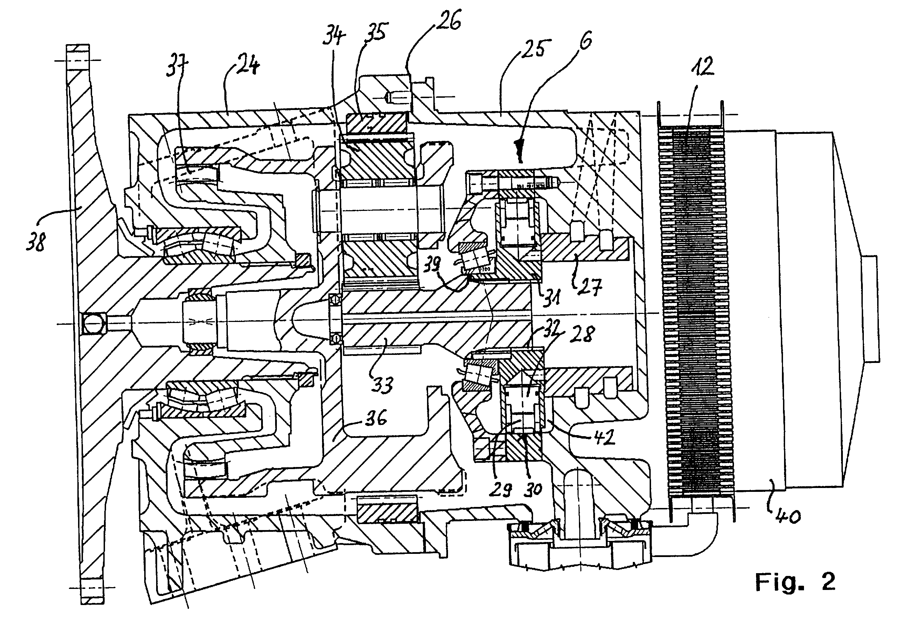

Eine mögliche konstruktive Ausgestaltung des hydrostatisch-mechanischen Getriebes zum Antrieb einer Betonmischer-Trommel ist der Fig. 2 zu entnehmen.

Das Getriebegehäuse 9 ist aus zwei Getriebegehäusehälften 24 und 25 zusammengefügt. Daher ist lediglich eine Gehäusedichtstelle 26 vorhanden. Das von der Hydraulikpumpe 2 geförderte Öl gelangt über einen Verteiler 27 zum Hydraulikmotor 6. Das Öl drückt gegen Kolben 28, wodurch sich eine Rolle 29 an einer Nockenbahn 30 (Cam) entlangbewegt. Hierdurch wird ein Zylinderblock 31 in Drehung versetzt. Über ein Keilwellenprofil 32 treibt der Hydraulikmotor 6 ein inneres Zentralrad 33 (Sonne) des einstufigen Planetengetriebes 7.
Mehrere Planetenräder 34 stehen mit dem inneren Zentralrad 33 und einem äußeren, gehäusefesten Zentralrad 35 in kämmender Antriebsverbindung. Hierdurch wird ein Steg 36 des Planetengetriebes 7 mit einer Übersetzung ins Langsame angetrieben. Über eine Bogenverzahnung 37 wird ein Antriebsflansch 38 der nicht näher gezeigten Betonmischer-Trommel angetrieben.

Das Keilwellenprofil 32 überträgt ausschließlich ein Drehmoment. Das innere Zentralrad 33 des Planetengetriebes 7 liegt über einen Bund 39 lediglich in axialer Richtung am Zylinderblock 31 an. Eine Lagerung in radialer Richtung ist nicht vorgesehen. Daher kann sich das innere Zentralrad 33 des Planetengetriebes 7 selbst zentrieren. Es können somit keine Kippkräfte auf den Hydraulikmotor 6 einwirken. Bei dem Ausführungsbeispiel nach Fig. 2 ist der Ölkühler 12 direkt an die Getriebegehäusehälfte 25 angeflanscht. An den Ölkühler 12 schließt sich ein Lüfter 40 an. Die Abbildung verdeutlicht auch, daß das hydrostatischmechanische Getriebe zum Antrieb einer Betonmischer-Trommel sich insbesondere durch eine kompakte Bauweise auszeichnet. Innerhalb des Getriebegehäuses 9 ist der Hydraulikmotor 6, das einstufige Planetengetriebe 7 sowie die Lagerung und die Mitnahmeverbindung des Antriebs flansches 38 untergebracht. Der Ölkühler 12 ist entweder in das Getriebegehäuse 9 integriert oder unmittelbar an dieses angeschraubt. Der Filter 14 ist ebenfalls unmittelbar am Getriebegehäuse 9 befestigt.

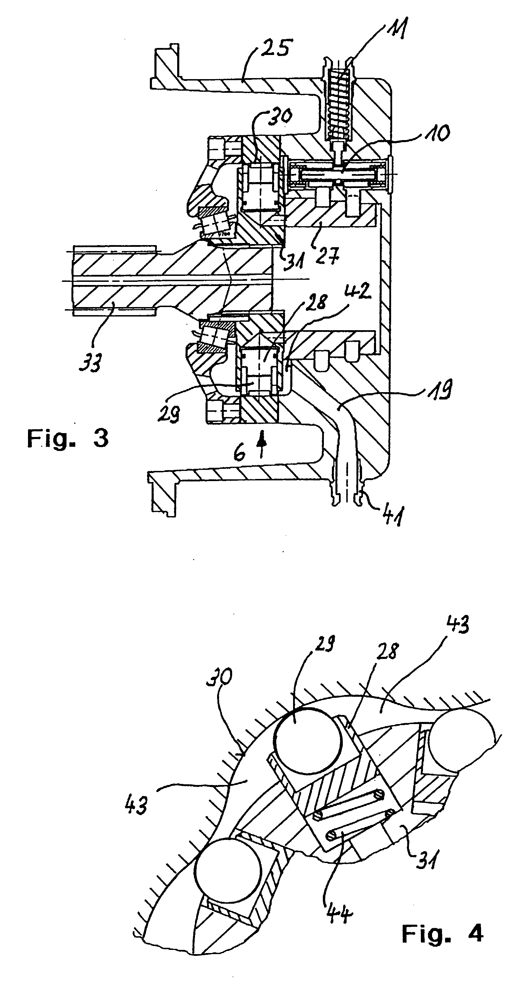

Anhand der Fig. 3 lassen sich Merkmale, die bereits im Zusammenhang mit der Erläuterung des Hydraulikschemas nach Fig. 1 erwähnt wurden, zusätzlich verdeutlichen. Eine Anschlußarmatur 41 dient dem Anschluß der Leitung 19, die ihrerseits wiederum vom Ölkühler 12 abzweigt. Die Leitung 19 setzt sich im Inneren der Getriebegehäusehälfte 25 fort und mündet, wie dies aus der Abbildung ersichtlich ist, unmittelbar in einen Ringraum 42 des Radialkolbenmotors (Hydraulikmotor 6). Aus der Leitung 19 strömt, wie bereits erwähnt, gekühltes Öl. Dieses Öl durchströmt den Hydraulikmotor 6 und kühlt dabei die wesentlichen Bauelemente des Hydraulikmotors:
Kolben 28, Rollen 29, Nockenbahn 30 und Zylinderblock 31. Aus dem Hydraulikmotor 6 austretendes Leckageöl mit hoher Temperatur vermischt sich mit dem einströmenden kühlen Öl und wird in das Innere des Getriebegehäuses 9 abgeführt.

Im oben liegenden Bereich der Getriebegehäusehälfte 25 befindet sich der Spülschieber 10 und das Spülventil 11.

In Fig. 4 sind Teile des als Radialkolbenmotors ausgebildeten Hydraulikmotors 6 in stark vereinfachter Darstellung wiedergegeben. Im Zylinderblock 31 sind die Kolben 28 gleitend geführt. Die Kolben 28 liegen über die Rollen 29 an der Nockenbahn 30 an, die einen etwa sinuswellenförmigen Verlauf hat. Aus dem Ringraum 41 strömt das über die Leitung 19 zugeführte gekühlte Öl in Zwischenräume 43, so daß der Radialkolbenmotor vom Öl in axialer Richtung durchströmt wird.

Der Zeichnung ist zu entnehmen, das jeder der Kolben 28 des Radialkolbenmotors unter der Wirkung eines Federelementes 44 im Zylinderblock 31 geführt ist. Die Federelemente 44 können beispielsweise aus Schraubendruckfedern gebildet sein. Die Federelemente 44 bewirken eine ständige, kraftschlüssige Verbindung zwischen den Rollen 29 der Kolben 28 und der Nockenbahn 30. Hiermit läßt sich folgender wesentlicher Vorteil erzielen bzw. folgendes Problem lösen:
Beim Abstellen des Verbrennungsmotors (Dieselmotor) neigt die Betonmischer-Trommel zum Nachpendeln. Dies deswegen, weil an der Innenwand der Trommel seitlich hochgeführte Betonmassen durch die Einwirkung der Schwerkraft nach unten absinken. Dies entspricht praktisch einer Drehrichtungsumkehr, so daß der Hydraulikmotor 6 zur Pumpe wird. Dieses Nachpendeln wird durch die Federelemente 43 vermieden, da eine Unterbrechung des Kraftflusses von der Betonmischer-Trommel zum hydrostatischen Teil des Antriebs zumindest soweit verhindert wird, daß es für die Praxis vernachlässigbar ist.

### Bezugszeichen

- 1: Welle
- 2: Hydraulikpumpe
- 3: Speisepumpe
- 4: Leitung
- 5: Leitung
- 6: Hydraulikmotor
- 7: Planetengetriebe
- 8: Pumpengehäuse
- 9: Getriebegehäuse
- 10: Spülschieber
- 11: Spülventil
- 12: Ölkühler
- 13: Leitung
- 14: Filter
- 15: Leitung
- 16: Leitung
- 17: Druckbegrenzungsventil
- 18: Verstelleinheit
- 19: Leitung
- 20: Verbindungsleitung
- 21: Verbindungsleitung
- 22: Verbindungsleitung
- 23: Leitung
- 24: Getriebegehäusehälfte
- 25: Getriebegehäusehälfte
- 26: Gehäusedichtstelle
- 27: Verteiler
- 28: Kolben
- 29: Rolle
- 30: Nockenbahn (Cam)
- 31: Zylinderblock
- 32: Keilwellenprofil
- 33: inneres Zentalrad
- 34: Planetenrad
- 35: äußeres Zentralrad
- 36: Steg
- 37: Bogenverzahnung
- 38: Antriebsflansch
- 39: Bund
- 40: Lüfter
- 41: Anschlußarmatur
- 42: Ringraum
- 43: Zwischenraum
- 44: Federelement

## Patentansprüche

1. Hydrostatisch-mechanisches Getriebe zum Antrieb einer Mischtrommel, insbesondere eines Transportbeton-Mischers, mit einer Hydraulikpumpe (2), die über Leitungen (4, 5) mit einem Hydraulikmotor (6) verbunden ist, einem Pumpengehäuse (8) und einem Getriebegehäuse (9) zur Aufnahme des Hydraulikmotors (6) und eines Planetengetriebes (7), dessen Steg (36) mit einem Antriebssflansch (38) in Antriebsverbindung steht, dadurch **gekennzeichnet,** daß jeder Kolben (28) des Hydraulikmotors (6) über Federelemente (44) im Zylinderblock (31) abgestützt ist, so daß eine ständig kraftschlüssige Verbindung zwischen den Rollen (29), den Kolben (28) und einer Nockenbahn (30) besteht.
